# EUROPEAN PATENT APPLICATION

(11) **EP 3 546 280 A1**
(43) Date of publication of application: **02.10.2019**
(21) Application number: 18165168.8
(22) Date of filing: 29.03.2018
(51) Int. Cl.: B60N 2/01, B60N 2/06, B60N 2/015, B60N 2/02

(54) **VEHICLE SEAT ASSEMBLY AND METHOD FOR MANIPULATING AN ELECTRICAL CONNECTOR SYSTEM OF A VEHICLE SEAT**

(71) Applicant: Yazaki Europe Ltd., Hemel Hempstead, Hertfordshire HP2 7SJ (GB)
(72) Inventor: FALTIN, Fabian, 50733 Köln (DE)
(74) Representative: Neumann Müller Oberwalleney & Partner Patentanwälte

(57) **Abstract**

A vehicle seat assembly comprising:
a vehicle seat (1),
a rail (5), wherein the vehicle seat is movable along the rail,
a cable (9) for establishing an electrical connection between an electrical component (13) of the vehicle seat and an electrical component (12) of the vehicle (14),
a cable winder (10), wherein the cable winder is preloaded for winding up the cable,
a first connector (7) electrically connected to the cable at a free end thereof,
a second connector (8) mounted to the vehicle seat,
wherein the vehicle seat can be engaged to and disengaged from the rail at any position along the rail,
wherein the first connector and the second connector are adapted to be connected to each other by moving the vehicle seat into a seat home position and
wherein the first connector and the second connector are adapted to be disconnected from each other by disengaging the vehicle seat from the rail.

## Description

The invention relates to a vehicle seat assembly comprising a vehicle seat and a rail, wherein the vehicle seat is moveable along the rail. A cable is provided for establishing an electrical connection between electrical components of the seat and electrical components of the vehicle. A cable winder is preloaded for winding up the cable. A first connector is electrically connected to the cable at a free end thereof and a second connector is mounted to the vehicle seat.

Such a vehicle seat assembly is disclosed in EP 2 709 223 B1 wherein the rail is fixed to a vehicle floor, in particular an automobile floor, in order to enable the adjustment of the vehicle seat along the rail by a passenger. In today's automobiles not only the front seats have to be equipped with electric components such as seat occupancy detection sensors, seat belt pretensioner, seat belt reminder or power adjustments components for the seat but also the vehicle seats in the rear seat row. Therefore, for automobiles with sliding seats various types of electric connector systems for connecting vehicle electric components with seat electric components have been employed. One is shown in EP 2 709 223 B1 having a first connector fixed to a fixing part which is also slidable engaged with the rail. The fixing part is secured to a frame of the vehicle seat. Accordingly, when the vehicle seat is moved along the rail also the fixing part with the first connector is moved. The cable winder always ensures that the cable is tensioned between the cable winder and the fixing part respectively the vehicle seat.

US 6 267 430 B1 shows another vehicle seat assembly having a rail and a shuttle which is fixedly engaged within the rail and is moveable along the rail. The vehicle seat can be attached to the shuttle. A cable winder with a cable is provided at one end of the rail, wherein the cable is connected to the shuttle. The shuttle comprises a first connector which is connectable to a second connector of the vehicle seat. The vehicle seat can be engaged with and disengaged from the shuttle in order to remove the seat from the vehicle.

An object of the invention is to provide a vehicle seat assembly with a vehicle seat which can be engaged to and disengaged from the rail wherein in a disengaged state the rail is free of any obstacles like cables or connectors.

The object is solved by a vehicle seat assembly comprising a vehicle seat, a rail, wherein the vehicle seat is movable along the rail, a cable for establishing an electrical connection between electrical components of the seat and electrical components of the vehicle, a cable winder, wherein the cable winder is preloaded for winding up the cable, a first connector electrically connected to the cable at a free end thereof, a second connector mounted to the vehicle seat, wherein the vehicle seat can be engaged to and disengaged from the rail at any position along the rail, wherein the first connector and the second connector are adapted to be connected to each other by moving the vehicle seat into a seat home position and wherein the first connector and the second connector are adapted to be disconnected from each other by disengaging the vehicle seat from the rail.

Due to the fact that a vehicle seat is directly engageable to the rail there is no need of a shuttle provided within the rail to be connected to the vehicle seat. Therefore, in the disengaged state the rail is free of a shuttle or the like. Further, the cable winder ensures that in the disengaged state of the vehicle seat the cable and the first connector are pulled into the connector home position so that the rail is free of any cables or connectors.

In one embodiment the vehicle seat is engaged to and disengaged from the rail by a mounting mechanism which is moveable between an engaging position and a disengaging position wherein in the engaging position a vehicle seat is engaged to the rail movable along the rail and in a disengaged position the vehicle seat is removable from the rail. In addition, the first connector and the second connector are adapted to be disconnected from each other by moving the mounting mechanism from its engaging position to its disengaging position.

The advantage is that it is not necessary to provide two different mechanisms, one for engaging and disengaging the vehicle seat and one for disconnecting the first and the second connector from each other. Only one mounting mechanism is necessary to provide both features, i.e. engaging and disengaging of the vehicle seat and disconnecting the first and second connector from each other.

In a disconnected state of the first connector and the second connector the first connector is pulled into a connector home position by the cable winder. In this position the rail is free of any obstacles like the cable or the first connector.

In an embodiment the vehicle seat assembly further comprises a holding mechanism holding the first connector in the connector home position. Thereby, in the connector home position the first connector is securely held to the rail so that by moving the vehicle seat to a seat home position the second connector of the vehicle seat can easily be connected to the first connector.

The problem is also solved by a method for manipulating an electrical connector system of a vehicle seat comprising the steps of: engaging a vehicle seat to a rail for movement of the vehicle seat along the rail, moving the vehicle seat into a seat home position and thereby connecting a first connector, which is electrically connected to a cable at a free end thereof, with a second connector mounted to the vehicle seat.

Hence, it is not necessary to manually grab the first connector and the second connector and manually connecting the first and the second connector to each other. The connection of the first connector and the second connector is achieved only by moving the vehicle seat within the rail to the seat home position. Therefore, the connection between the first connector and the second connector can easily be accomplished by a passenger.

In an embodiment of the method by moving a mounting mechanism of the vehicle seat from an engaged position to a disengaged position and thereby disengaging the vehicle seat from the rail additionally the first connector is disconnected from the second connector. Accordingly, also for disconnecting the first connector from the second connector it is not necessary for a passenger to manually grab one of the connectors and to pull them away from each other. This disconnection is achieved by using the same mechanism, i.e. the mounting mechanism of the vehicle seat, which is used to disengage the vehicle seat from the rail. The handling for disconnecting the first connector and the second connector from each other is, therefore, very easy.

The invention will now be described by way of example with reference to the accompanying Figures, wherein:
- Figure 1: a vehicle seat in a state disengaged from a rail;
- Figure 2: the vehicle seat of Figure 1 in a state engaged to the rail with a first connector of a cable winder assembly being disconnected from a second connector of the vehicle seat;
- Figure 3: the engaged vehicle seat of Figure 2 moved to the seat home position for connecting the first and second connectors to each other;
- Figure 4: the engaged vehicle seat of Figure 3 with the first and second connectors being connected to each other wherein the vehicle seat is moved away from the seat home position;
- Figure 5: the vehicle seat of Figure 3 disengaged from the rail and disconnecting the first and second connectors from each other by actuating a mounting mechanism;
- Figure 6: a rail without vehicle seat and the cable winder winding back the cable; and
- Figure 7: a top view of a vehicle with several slidable vehicle seats.

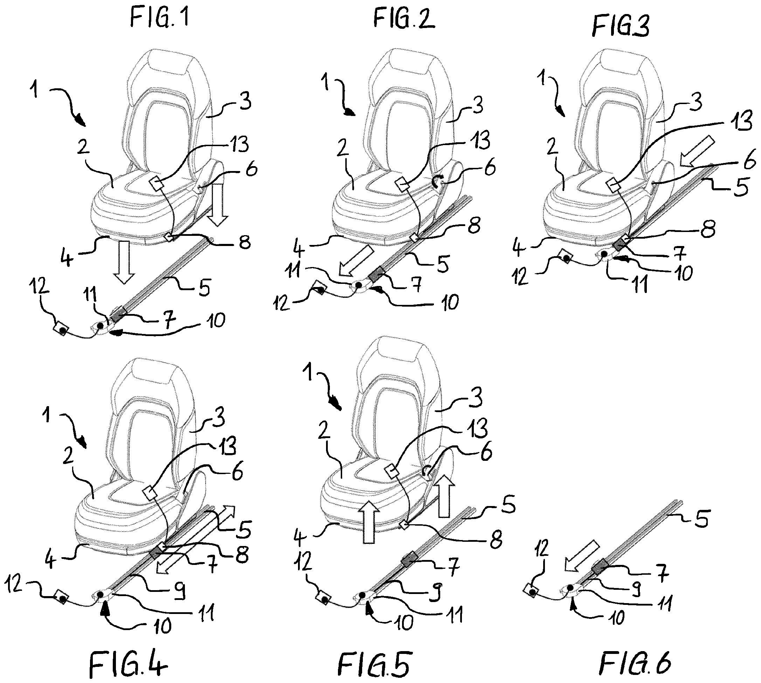

Figures 1 to 6 depict a vehicle seat 1 in different positions and states. The Figures are described together. The vehicle seat 1 comprises a seating area 2 and a backrest 3. The seating area 2 is supported by a base 4. The base 4 can be engaged and disengaged to a rail 5 so that the entire vehicle seat 1 can be engaged and disengaged to the rail 5. The rail 5 is fixed to a vehicle floor wherein the seat 1 can be moved along the rail 5 by a passenger. In the view according to Figures 1 to 6 only one rail is shown. However, preferably the vehicle seat 1 is engaged to and disengaged from two parallel arranged rails. Figures 1 to 6 show the vehicle seat assembly in a lateral view in order to explain the function and are drawn in a simplifying manner.

In the disclosed embodiment the rail 5 is orientated horizontally. In Figure 1 the vehicle seat 1 is disclosed in a disengaged state and in a distance from the rail 5 being moved toward the rail. The vehicle seat 1 can be moved in a downward vertical direction into the rail 5. The vehicle seat 1 is provided with a mounting mechanism 6 which is shown in a disengaged position in Figure 1. In order to engage the vehicle seat 1 to the rail 5 the base 4 is moved to the rail 5 and the mounting mechanism 6 is moved to an engaged position as shown in Figure 2. In the engaged position of the mounting mechanism 6 the vehicle seat 1 can be moved along the rail 5 in horizontal direction but cannot be removed from the rail 5. In order to avoid unintentional movements of the vehicle seat 1 well-known braking mechanisms are provided which have to be released manually before sliding and moving the vehicle seat 1 along the rail 5 by a passenger.

The rail 5 is provided with a first connector 7 which is shown in Figure 1 in a connector home position. The first connector 7 is arranged at one end of the rail 5, in the shown embodiment in front of the vehicle seat 1, when in the connector home position.

The base 4 is provided with a second connector 8 at a front side of the vehicle seat 1 wherein the first connector 7 and the second connector 8 are facing each other.

The first connector 7 is electrically connected to a cable 9 (Figs. 4, 5 and 6) which is preferably a flat cable. The cable 9 is wound up by a cable winder 10. The cable winder 10 is adapted to electrically connect the cable 9 to an electric component 12 of the vehicle, such as for instance an ECU (Electronic Control Unit). The cable winder 10 can be a cable winder according to EP 2 709 223 B1.

The second connector 8 is electrically connected to an electric component 13 of the vehicle seat 1, such as a sensor. To connect the ECU 12 with the sensor 13 of the vehicle seat 1 first connector 7 and the second connector 8 have to be connected to each other. In order to establish an electrical connection between the ECU 12 and the sensor 13 or other components, the vehicle seat 1 is moved to a seat home position as disclosed in Figure 3. In the seat home position the vehicle seat 1 is at the connector home position of the first connector 7 so that the first connector 7 and the second connector 8 are connected to each other by a movement of the vehicle seat 1. After the first and second connectors 7, 8 have been connected to each other the vehicle seat 1 can be moved in any position away from the seat home position as shown in Figure 4, wherein due to the connection between the first connector 7 and the second connector 8, the first connector 7 is moved together with the second connector 8 of the vehicle seat 1. By moving the first connector 7 the cable 9 is unwind from the cable winder 10. Preferably, the cable 9 is arranged in the rail 5 or in a separate cable rail arranged parallel to the rail 5.

For disengaging the vehicle seat 1 from rail 5 the mounting mechanism 6 is moved from its engaged position as shown in Figure 2, 3 and 4 to a disengaged position as shown in Figure 5. By moving the mounting mechanism 6 from its engaged position to its disengaged position not only the seat 1 is released from the rail 5 but also the first connector 7 and the second connector 8 are moved apart from each other so that they are disconnected.

After disconnecting the first connector 7 from the second connector 8 the cable winder 10 winds up the cable and thereby pulls back the first connector 7 into its connector home position in which it is held by a holding mechanism 11, so that it is secured in the home position and can be connected again by moving the vehicle seat 1 into its seat home position. In the embodiment as shown in the figures the holding mechanism 11 is the housing of the cable winder 10 against which the first connector 7 is force loaded in its home position.

In order to pull back the first connector 7 the cable winder 10 is preloaded for winding up the cable 9, for instance by a spring element within the cable winder 10.

In the embodiment as disclosed in Figures 1 to 6 the seat home position is in front of the vehicle seat 1. Alternatively, the seat home position could be behind the vehicle seat 1 at the other end of the rail 5. In this embodiment also the connector home position would be at the other end of the rail 5. In order to supply power to a second row of seats and a third row of seats one cable winder can be located at the front of the rail to supply power to a seat of the second row and one cable winder can be located at the rear of the rail to supply power to a seat of the third row. The cable winders at the front and at the rear can be located at one and the same rail or at two different rails.

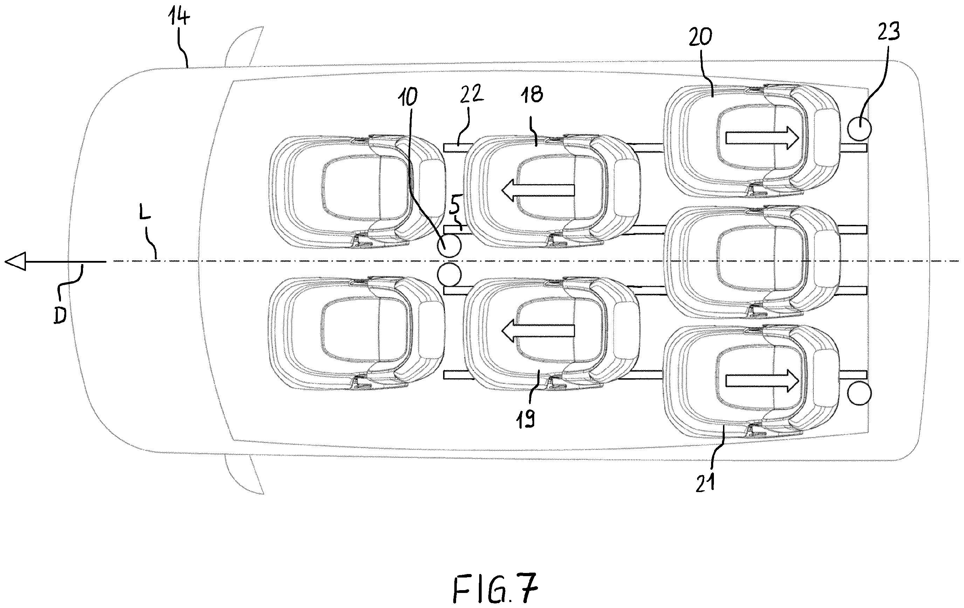

Figure 7 discloses a top view of a vehicle 14, having a driving direction D indicated by the arrow, parallel to a longitudinal axis L of the vehicle 14. The vehicle 14 has a first seat row 15, a second seat row 16 and a third seat row 17 which are arranged one behind the other viewed in driving direction D. The second seat row 16 comprises a right seat 18 and a left seat 19. The third seat row 17 comprises a single right seat 20 and a double left seat 21. All of these mentioned seats 18, 19, 20, 21 are slideable parallel to the longitudinal axis L.

The right seat 18 and the single right seat 20 are engaged to a first rail 5 and a second rail 22 which are mounted to the vehicle floor. The single right set 20 and the first rail 5 is functionally identical to the vehicle seat assembly according to Figures 1 to 6.

The first rail 5 comprises a cable winder 10 arranged at a front end of the first rail 5 reviewed in the driving direction D. In driving direction D the first rail 5 is arranged on the left side of the right seat 18. The right seat 18 has a second connector (not shown) on the left side so that by moving the right seat 18 to the front the second connector of the right seat 18 can be connected to the first connector of the cable winder 10 as described in Figures 1 to 6.

The second rail 22, which is arranged parallel to the first rail 5, has a cable winder 23 at a rear end as described in connection with the alternative embodiment to the embodiment of Figures 1 to 6. The single right seat 20 has a second connector (not shown) at a rear side of the single right seat 20 which can be connected to a first connector (not shown) of the rail 22 at a rear end. At the rear end the second rail 22 is provided with a cable winder 23.

Accordingly, by moving the right seat 18 to the front and by moving the single right seat 20 to the rear of the vehicle 14 the vehicle seats 18, 20 can be connected to an electrical system or component of the vehicle 14.

The vehicle seat assembly with the left seat 19 and the double left seat 21 is functionally identical to the vehicle seat assembly with the right seat 18 and the single right seat 20 arranged. The vehicle seat assembly with the left seats 19, 22 is only arranged symmetrical to the longitudinal axis L to the vehicle seat assembly with the right seats 18, 20.

In order to make sure that the passenger or user who installs a vehicle seat has moved the vehicle seat to the seat home position and thereby has connected the first connector and the second connector, the RFID (radio-frequency identification) technology could be used. The vehicle seat could be equipped with an RFID-chip and the rail could serve as an antenna. If the vehicle seat is connected to the rail this would be detected and an ECU would check whether the vehicle seat is electrically connected with the electric component of the vehicle. If the vehicle seat is not connected to the electric component of the vehicle a warning signal could be displayed to the driver.

### Reference Signs

- 1: vehicle seat
- 2: seating area
- 3: backrest
- 4: base
- 5: rail
- 6: mounting mechanism
- 7: first connector
- 8: second connector
- 9: cable
- 10: cable winder
- 11: holding mechanism
- 12: electric component of the vehicle
- 13: electric component of the vehicle seat
- 14: vehicle
- 15: first seat row
- 16: second seat row
- 17: third seat row
- 18: right seat
- 19: left seat
- 20: single right seat
- 21: double left seat
- 22: rail
- 23: cable winder

## Claims

1. A vehicle seat assembly comprising:
a vehicle seat (1),
a rail (5), wherein the vehicle seat (1) is movable along the rail (5),
a cable (9) for establishing an electrical connection between an electrical component (13) of the vehicle seat (1) and an electrical component (12) of the vehicle (14),
a cable winder (10), wherein the cable winder (10) is preloaded for winding up the cable (9),
a first connector (7) electrically connected to the cable (9) at a free end thereof,
a second connector (8) mounted to the vehicle seat (1),
**characterized in**
**that** the vehicle seat (1) can be engaged to and disengaged from the rail (5) at any position along the rail (5),
**that** the first connector (7) and the second connector (8) are adapted to be connected to each other by moving the vehicle seat (1) into a seat home position and
**that** the first connector (7) and the second connector (8) are adapted to be disconnected from each other by disengaging the vehicle seat (1) from the rail (5).

2. The vehicle seat assembly according to claim 1,
**characterized in**
**that** the vehicle seat (1) is engaged to and disengaged from the rail (5) by a mounting mechanism (6) which is movable between an engaging position and a disengaging positon, wherein in the engaging position the vehicle seat (1) is engaged to the rail (5) movable along the rail (5) and in the disengaging position the vehicle seat (1) is removable from the rail (5), and
**that** the first connector (7) and the second connector (8) are adapted to be disconnected from each other by moving the mounting mechanism (6) form its engaging position to its disengaging position.

3. The vehicle seat assembly according to claim 1 or 2,
**characterized in**
**that** in a disconnected state of the first connector (7) and the second connector (8), the first connector (7) is pulled into a connector home position by the cable winder (10).

4. The vehicle seat assembly according to one of claims 1 to 3,
**characterized in**
**that** the vehicle seat (1) assembly further comprises a holding mechanism (11) holding the first connector (7) in the connector home position.

5. A method for manipulating an electrical connector system of a vehicle seat (1) comprising the steps of:
engaging a vehicle seat (1) to a rail (5) for movement of the vehicle seat (1) along the rail (5),
moving the vehicle seat (1) into a seat home position and thereby connecting a first connector (7), which is electrically connected to a cable (9) at a free end thereof, with a second connector (8) mounted to the vehicle seat (1).

6. The method according to claim 5 further comprising the steps of:
moving a mounting mechanism (6) of the vehicle seat (1) from an engaging position to a disengaging positon and thereby disengaging the vehicle seat (1) from the rail (5), and thereby additionally disconnecting the first connector (7) from the second connector (8).
